Europäisches Patentamt

European Patent Office

Office européen des brevets

(11) Publication number: **0 225 734**
**A1**

## (12) EUROPEAN PATENT APPLICATION

(21) Application number: **86308768.0**

(22) Date of filing: **11.11.86**

(51) Int. Cl.⁴: **G 11 B 23/087**, B 29 C 65/60

(30) Priority: **21.11.85 JP 179514/85 U**

(43) Date of publication of application: **16.06.87**
**Bulletin 87/25**

(84) Designated Contracting States: **DE FR GB NL**

(71) Applicant: **SONY CORPORATION,**
**7-35 Kitashinagawa 6-Chome Shinagawa-ku,**
**Tokyo 141 (JP)**

(72) Inventor: **Iwahashi, Yuuji c/o SONY MAGNETIC**
**PRODUCTS INC., 5-6 Kitashinagawa 6-chome,**
**Shinagawa-ku Tokyo (JP)**
Inventor: **Urayama, Kiyoshi c/o SONY MAGNETIC**
**PRODUCTS INC., 5-6 Kitashinagawa 6-chome,**
**Shinagawa-ku Tokyo (JP)**

(74) Representative: **Pilch, Adam John Michael et al, c/o D.**
**Young & Co. 10 Staple Inn, London WC1V 7RD (GB)**

(54) **Tape cassettes.**

(57) A tape cassette (1') includes supply and take-up reels (6, 7) on which a tape (9) extending between the reels is wound, a cassette housing (3, 4) containing the reels (6, 7), leaf springs (14') for urging the reels (6, 7) towards a lower portion (3) of the housing, and headed pins (15) depending from an upper portion (4) of the housing through holes (14a) in the leaf springs (14') for mounting the latter. Each leaf spring (14') has a surface portion (14b) adjacent the respective hole (14a) formed with fine convex and concave irregularities and being engaged by the respective headed pin (15) for securely holding the leaf spring (14') against turning about the headed pin (15).

1

## TAPE CASSETTES

This invention relates to tape cassettes, such as tape cassettes intended for use in video tape recorders and other types of information processing apparatus, and more particularly is directed to means for positioning supply and take-up reels within the tape cassette housing.

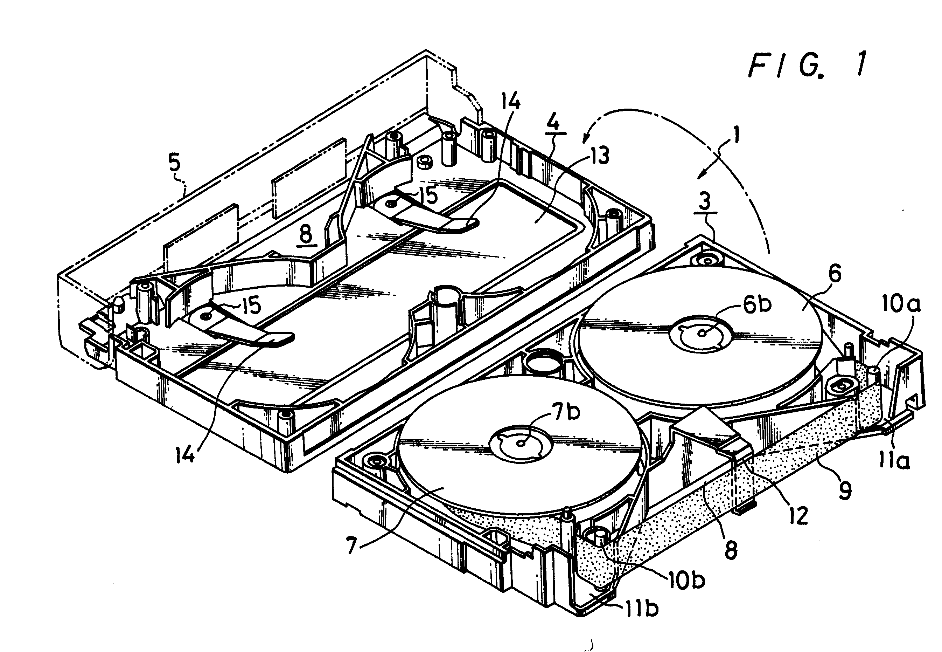

As shown in Figures 1 to 3 of the accompanying drawings, a previously-proposed cassette 1 for use in a video tape recorder (VTR) generally comprises a cassette housing or casing 2 formed by mutually connecting lower and upper housing portions 3 and 4, respectively, typically moulded from a synthetic resin. The tape cassette 1 further includes a front cover or lid 5, also moulded from synthetic resin, and hingedly connected to the cassette housing 2 so as to be movable between open and closed positions. A supply reel 6 and a take-up reel 7 are located within the cassette housing 2, and a magnetic tape 9 is wound about the reels 6 and 7 and extends therebetween. A cut-out portion 8 is provided at the front of the cassette housing 2, and the magnetic tape 9 extends from the supply reel 6 about a tape guide 10a and then through an opening 11a to the exterior of the housing 2 at one side of the cut-out 8. From the opening 11a, the tape 9 extends across the cut-out 8 past the front surface of a tape positioning member 12 located at the centre of the cut-out 8, the tape positioning member 12 being formed so as to position the tape 9 between the member 12 and the cover or lid 5 when the latter is in its closed position. After extending across the cut-out 8, the magnetic tape 9 extends into the housing 2 through an opening 11b at the side of the cut-out 8 remote from the opening 11a, whereupon the tape passes through a tape guide 10b and is wound on to the take-up reel 7. The upper housing portion 4 is generally formed with a rectangular transparent window 13 through which the amounts of the tape 9 wound on the reels 6 and 7 can be observed. Leaf springs 14 are mounted at one end thereof on the underside of the upper housing portion 4 and are engageable at their free ends with central nipples 6b and 7b at the tops of the supply reel 6 and the take-up reel 7, respectively, for urging the reels 6,7 towards the lower housing portion 3.

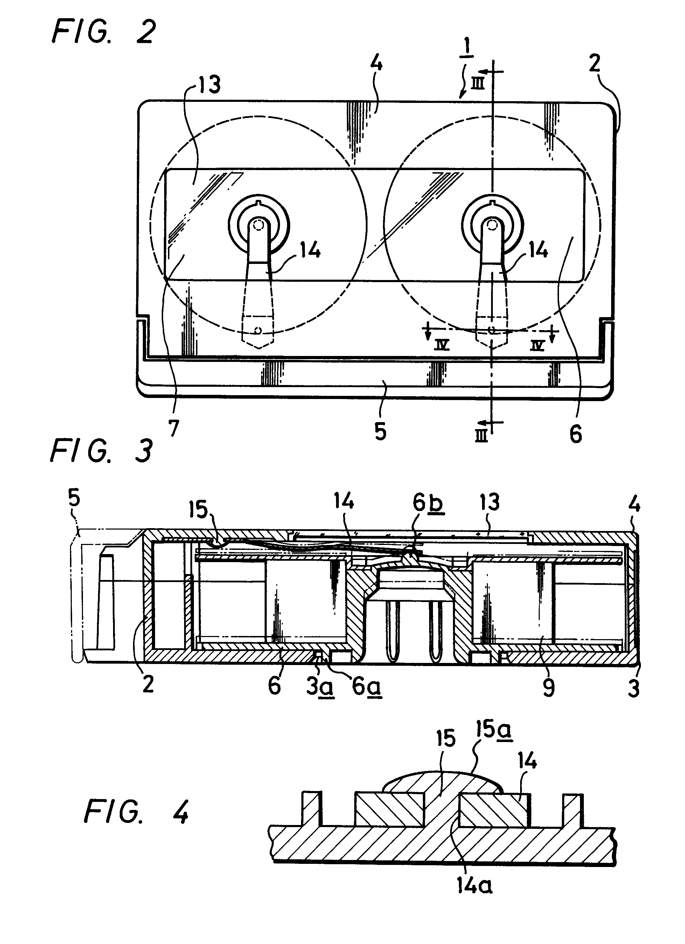

Thus, when the tape cassette 1 is not in use, the leaf springs 14 maintain the reels 6 and 7 against the bottom of the housing 2, as particularly shown in Figure 3, so as to ensure that an annular depending rim provided at the bottom of each of the reels, for example as indicated at 6a in the case of the supply reel 6 in Figure 3, remains loosely within a corresponding circular hole 3a in the lower housing portion 3 for rotatably positioning the respective reel within the cassette housing.

When the tape cassette 1 is loaded into a video tape recorder (not shown) and operatively positioned, the cover or lid 5 is opened, the reels 6 and 7 are engaged by respective reel support spindles and thereby slightly lifted from the bottom of the cassette housing 2 against the force of the leaf springs 14, the magnetic tape 9 is drawn out of the housing 2 and loaded around a guide drum, and then recording and/or reproduction of video or other signals is effected on the tape 9 by means of rotary magnetic heads associated with the guide drum.

In the previously-proposed tape cassette 1, each of the leaf springs 14 is fixed within the housing 2 by means of a thermoplastic pin 15 depending from the undersurface of the upper housing portion 4 and, as shown in Figure 4, extending through a respective hole 14a formed in the mounted end portion of the leaf spring 14. After extending through the respective hole 14a, the tip or free end portion of each pin 15 is heated or otherwise softened and then pressed or squeezed to form a laterally enlarged head 15a against the leaf spring 14 by which the latter is retained on the respective pin 15.

However, since the surfaces of each leaf spring 14 are relatively smooth, after the head 15a has been formed or moulded on the pin 15 for holding the leaf spring 14 thereon, there is the problem that the leaf spring may turn or wobble about the respective pin 15 and thereby risk disturbance of the desired secure engagement of the free end of the spring 14 with the nipple at the centre of the top of the respective reel.

According to the invention there is provided a tape cassette comprising

supply and take-up reels having a tape wound thereon and extending between said reels,

a cassette housing containing said reels and including lower and upper housing portions with said lower housing portion having means co-operatively engageable with said reels for rotatably positioning the latter within said housing,

leaf spring means for urging said reels towards said lower housing portion, and

means for mounting said leaf spring means with respect to said upper housing portion, said mounting means including hole means in said leaf spring means and pin means depending from said upper housing portion through said hole means and being headed for retaining said leaf spring means thereon;

characterised in that said leaf spring means includes a surface portion adjacent said hole means having fine convex and concave irregularities and being engaged by said headed pin means to hold securely said leaf spring means against relative movement about said pin means.

Preferably, the pin means comprises respective pins of a thermoplastic material so that, when each pin is softened in the course of being headed, the resulting formed head flows into, and intimately conforms to the fine convex and concave irregularities of the surface portion adjacent the respective hole.

The invention will now be described by way of example with reference to the accompanying drawings, throughout which like parts are referred to by like references, and in which:

Figure 1 is an exploded perspective view of a previously-proposed tape cassette;

Figure 2 is a top plan view of the tape cassette shown in Figure 1, but in an assembled state;

Figure 3 is an enlarged sectional view taken along the line III-III in Figure 2;

Figure 4 is a fragmentary, further enlarged sectional view taken along the line IV-IV in Figure 2, and showing details of the attachment of a leaf spring to the cassette housing in the tape cassette shown in Figures 1 to 3;

Figure 5 is an exploded perspective view similar to that of Figure 1, but showing a tape cassette according to a first embodiment of the present invention;

Figure 6 is a fragmentary perspective view showing a portion of a leaf spring included in the tape cassette of Figure 5;

Figure 7 is a fragmentary enlarged sectional view illustrating the attachment of the leaf spring shown in Figure 6 to the cassette housing in a tape cassette according to the first embodiment of the invention illustrated in Figure 5;

Figure 8 is a fragmentary perspective view similar to that of Figure 6 but illustrating another embodiment of the present invention; and

Figure 9 is an enlarged fragmentary sectional view similar to that of Figure 7, but showing the attachment of the leaf spring shown in Figure 8 to the cassette housing.

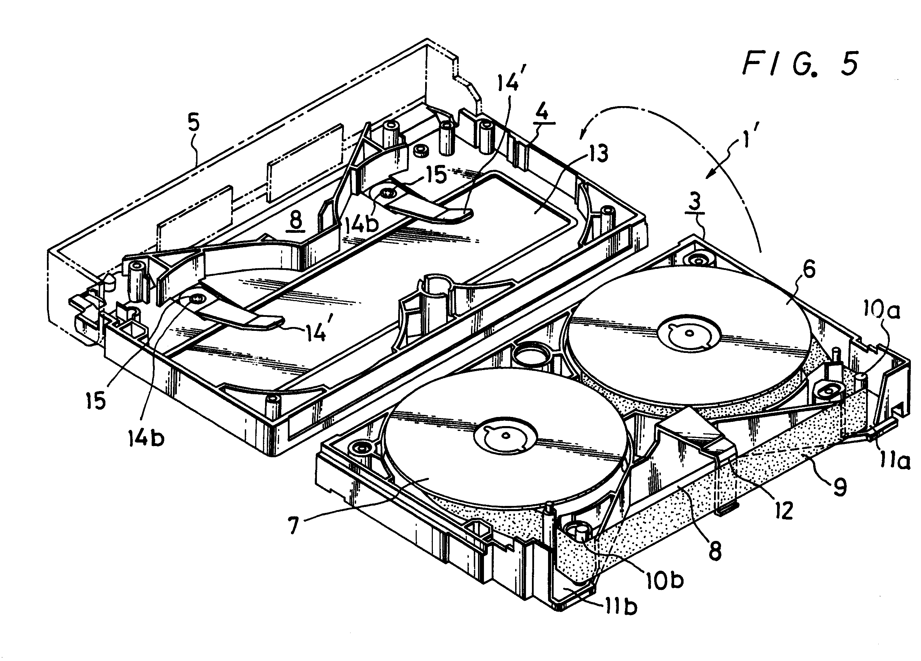

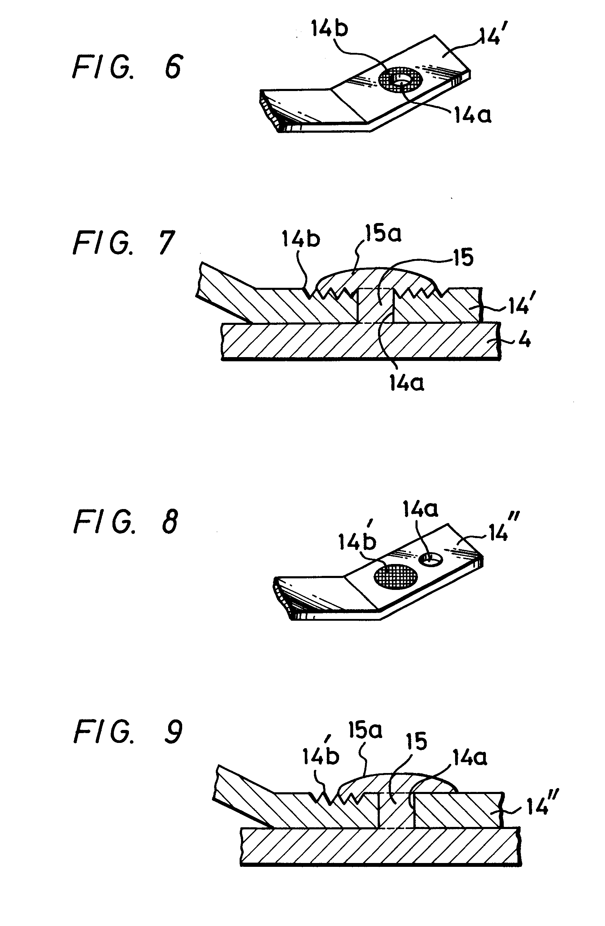

Referring in detail to Figures 5, 6 and 7, it will be seen that the parts and elements of a tape cassette 1' according to an embodiment of this invention which correspond to those described above with reference to Figures 1 to 4 are identified by the same reference numerals. Once again, each of the leaf springs 14' for urging the reels 6 and 7 towards the lower housing portion 3 is secured at its mounting end portion to the underside of the upper housing portion 4 by means of a headed pin 15. However, as shown particularly in Figures 6 and 7, in accordance with this embodiment of the invention, each leaf spring 14' has a surface portion 14b adjacent the respective hole 14a which is formed with relatively fine convex and concave irregularities. Such fine convex and concave irregularities in the surface portion 14b can be formed by a rasp, roulette or the like, or may be pressed into the surface portion 14b by providing a suitable configuration of the die used in punching or otherwise forming the respective leaf spring 14', in which case no additional steps are required in the production process.

As in the above-described previously-proposed tape cassette 1, each leaf spring 14' is secured to the underside of the upper housing portion 4 by a respective thermoplastic pin 15 depending from the upper housing portion 4 and inserted into the hole 14a of the leaf spring 14', whereupon the free end or tip of the pin 15 is heated and pressed so as to form the head 15a. However, since the surface portion 14b having the fine convex and concave irregularities is formed adjacent the hole 14a on the face of the leaf spring 14' directed away from the upper housing portion 4, the head 15a formed on the pin 15 extends over the surface portion 14b and intimately conforms to the fine convex and concave irregularities thereof, as particularly shown in Figure 7. In other words, during heating and pressing of the pin 15 for forming the head 15a thereon, the softened thermoplastic material of the pin flows into and meshes with the irregularities of the surface portion 14b with the result that, when the headed pin 15 has set, turning or wobbling of the leaf spring 14' about the pin 15 is positively and securely prevented.

It will be seen that, in the embodiment of the invention shown in Figures 6 and 7, the surface portion 14b having fine convex and concave irregularities surrounds the hole 14a so as to be engaged by the head 15a of the respective pin 15 over the entire extent of such head. However, the surface portion formed with fine convex and concave irregularities may be otherwise disposed adjacent the hole 14a so long as it is engaged by the head 15a on the respective pin 15 when such head is moulded or pressed.

For example, as shown in Figures 8 and 9, each leaf spring 14" may, in accordance with another embodiment of this invention, be formed with a surface portion 14'b having fine convex and concave irregularities which is adjacent, but spaced a small distance from, the hole 14a in the respective leaf spring 14". Thus, when the pin 15 is extended through the hole 14a of the leaf spring 14" and has its tip or free end heated and pressed so as to soften the thermoplastic material of the pin 15 and form a head 15a thereon, such head again extends over and intimately conforms to the fine convex and concave irregularities of the surface portion 14'b, as particularly shown in Figure 9. Therefore, once again, each leaf spring 14" is locked or secured against turning or wobbling about the respective mounting pin 15.

It will be apparent that the location on each leaf spring of the surface portion having fine convex and concave irregularities is not limited to the locations described above with reference to Figures 6 and 8, so long as such surface portion is positioned to be at least partly overlapped by the head formed or moulded on the respective mounting pin. Further, the surface portion having fine convex and concave irregularities may be formed on the face of each leaf spring 14' or 14" which is directed towards the upper housing portion 4, as well as on the face of the leaf spring directed away from such upper housing portion as shown in Figures 6 and 8. In such a case, the fine convex and concave irregularities facing towards and bearing against the surface of the upper housing portion 4 will further enhance the resistance to turning or wobbling of the leaf spring about its mounting pin.

## CLAIMS

1.    A tape cassette comprising

supply and take-up reels (6,7) having a tape (9) wound thereon and extending between said reels (6,7),

a cassette housing (2) containing said reels (6,7) and including lower and upper housing portions (3,4) with said lower housing portion (3) having means (3a) co-operatively engageable with said reels (6,7) for rotatably positioning the latter within said housing (2),

leaf spring means (14';14") for urging said reels (6,7) towards said lower housing portion (3), and

means (14a,15) for mounting said leaf spring means (14';14") with respect to said upper housing portion (4), said mounting means (14a,15) including hole means (14a) in said leaf spring means (14';14") and pin means (15) depending from said upper housing portion (4) through said hole means (14a) and being headed for retaining said leaf spring means (14';14") thereon;

characterised in that said leaf spring means (14';14") includes a surface portion (14b;14'b) adjacent said hole means (14a) having fine convex and concave irregularities and being engaged by said headed pin means (15) to hold securely said leaf spring means (14;14") against relative movement about said pin means (15).

2.    A tape cassette according to claim 1, wherein said pin means (15) is of a thermoplastic material and is softened when being headed to conform intimately to said fine convex and concave irregularities.

3.    A tape cassette according to claim 2, wherein said leaf spring means includes a pair of leaf springs (14';14") respectively engaging said supply and take-up reels (6,7), said hole means includes a hole (14a) in each of said leaf springs (14';14"), and said pin means includes a pair of headed pins (15) each depending from a surface of said upper housing portion (4) and engaging in said hole (14a) of a respective one of said leaf springs (14';14").

4.    A tape cassette according to claim 3, wherein each of said leaf springs (14';14") has opposed faces through which the respective hole (14a) extends, and said surface portion (14b;14'b) having fine convex and concave irregularities is on at least one of said faces.

5.    A tape cassette according to claim 4, wherein said hole (14a) of each of said leaf springs (14') opens within and is surrounded by said surface portion (14b) having fine convex and concave irregularities.

6.    A tape cassette according to claim 4, wherein said surface portion (14'b) having fine convex and concave irregularities is spaced from said hole (14a) in the respective leaf spring (14") so that the respective headed pin (15) intimately engages said irregularities beyond said hole (14a).

7.    A tape cassette according to claim 4, claim 5 or claim 6, wherein said one face of each leaf spring (14';14") is directed away from the surface of the upper housing portion (4).

FIG. 1

*FIG. 2*

*FIG. 3*

*FIG. 4*

FIG. 5

FIG. 6

FIG. 7

FIG. 8

FIG. 9

European Patent
Office

**EUROPEAN SEARCH REPORT**

Application number

EP 86 30 8768

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 152 693  (SONY CORP.)<br>* page 2, lines 23-27; figure 2 * | 1-3 | G 11 B  23/087<br>B 29 C  65/60 |
| A | DE-A-3 210 310  (BUDDE)<br><br>* claim 1; figure 1 * | 1,2,4, 5 | |
| A | DE-A-3 109 500  (HALD)<br>* page 4, lines 21-29; figure 1 * | 1-3 | |

TECHNICAL FIELDS
SEARCHED (Int. Cl.4)

G 11 B    23
F 16 B
B 21 J
B 29 C

The present search report has been drawn up for all claims

| Place of search | Date of completion of the search | Examiner |
|---|---|---|
| BERLIN | 13-02-1987 | GERARD E.A.S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82